Europäisches Patentamt

European Patent Office

Office européen des brevets

(19)

(11) EP 0 444 918 B1

## (12) EUROPEAN PATENT SPECIFICATION

(45) Date of publication and mention
of the grant of the patent:
**05.06.1996 Bulletin 1996/23**

(51) Int Cl.6: **H04N 1/41**, H04N 7/24,
H04N 5/92

(21) Application number: **91301625.9**

(22) Date of filing: **28.02.1991**

(54) **Data compression apparatus**

Einrichtung zur Datenkompression

Dispositif de compression de données

(84) Designated Contracting States:
**DE FR GB**

(30) Priority: **28.02.1990 JP 50269/90**
**19.03.1990 JP 71096/90**
**19.03.1990 JP 71097/90**

(43) Date of publication of application:
**04.09.1991 Bulletin 1991/36**

(73) Proprietor: **VICTOR COMPANY OF JAPAN,
LIMITED**
**Kanagawa-ku Yokohama (JP)**

(72) Inventors:
• **Sugahara, Takayuki**
**Yokosuka-shi, Kanagawa-ken (JP)**
• **Ando, Ichiro**
**Kanagawa-ku, Yokohama (JP)**

(74) Representative: **Senior, Alan Murray et al**
**J.A. KEMP & CO.,**
**14 South Square,**
**Gray's Inn**
**London WC1R 5LX (GB)**

(56) References cited:
EP-A- 0 060 694          EP-A- 0 066 697
EP-A- 0 138 529          EP-A- 0 267 579
EP-A- 0 396 360          US-A- 4 359 736
US-A- 4 510 578          US-A- 4 706 260
US-A- 4 807 042

• **Patent Abstracts of Japan, unexamined
applications, E section, vol.10, no.244, 22.08.86,
page 125 E 430 & JP-A-6174455**

## Description

This invention relates to a data compression apparatus usable in various systems such as a system for recording a color still-picture signal into a recording medium.

Description of the Prior Art

In some systems for recording image data into a magnetic disk, the image data are compressed to enable efficient recording.

In a known image data compression apparatus, a frame represented by the image data is divided into a plurality of blocks each having $N \times N$ or $N \times M$ pixels, and the image data are subjected to orthogonal transform for each of the blocks. Then, the resultant image data (transform coefficients) are quantized with a predetermined quantization step size, and the quantized data are encoded into zero run length code or Huffman code. In this way, the image data are compressed. In such data compression, the amount of the image data, that is, the number of bits of the image data or the transmission bit rate of the image data, depends on the contents of the image represented by the image data.

There are two method of controlling the amount of image data at a constant amount or below a predetermined limit. According to a first method, original image data are quantized with an initial quantization step size and the amount of the resultant quantized image data is calculated, and the quantization step size is changed to a new quantization step size in response to the calculated image data and the original image data are again quantized with the new quantization step size to obtain final quantized image data. The first method requires quantization to be executed twice for same image data.

A second method uses the fact that coefficients of data outputted from an orthogonal transform device have a given relation with the amount of codes. In the second method, the sum of the squares of coefficients is calculated for each of blocks, and the blocks are sorted into classes according to the calculated sums. A larger number of bits are assigned to a block of the class corresponding to a large amount of codes, while a smaller number of bits are assigned to a block of the class corresponding to a small amount of codes. The second method requires the addition of information representing classes.

EP-A-0267579, on which the precharacterising portion of appended claims 1 and 4 are based, discloses an image coding system having a plurality of quantization characteristics which may be selected by a control circuit according to an histogram formed in response to a sequence of coefficients resulting from a sequence of digital image signals, to monitor an amount of information in every one of predetermined intervals. The amount of information is calculated by summing up the coefficients.

It is an object of this invention to provide an improved data compression apparatus.

A first aspect of this invention provides an image data compression apparatus comprising:

predicted amount generating means for calculating the predicted code amount of one frame of the input image data; and
means for setting a target code amount; and
quantization step-size generating means for outputting a quantization step according to said predicted code amount and said target code amount; and
transform means for subjecting said input image data to a predetermined orthogonal transform; and
quantizing means for quantizing the output data from the transform means with a quantization step size outputted from the quantization step-size generating means;

characterised in that

said predicted amount generating means comprises
processing means for subjecting one frame of said input image data to a predetermined pixel filtering process and for outputting the resulting filtered data; and
calculating means for executing a predetermined calculation on said filtered data and outputting an activity value, said predetermined calculation including at least an addition carried out over all of the filtered data corresponding to one frame; and
means for converting said activity value into a corresponding predicted code amount;
and wherein said quantization step-size generating means is for deriving a difference between the predicted code amount and the target code amount, and for outputting a quantization step-size corresponding to the difference.

A second aspect of this invention provides an image data compression apparatus comprising:

predicted amount generating means for calculating the predicted code amount of one frame of the input image data; and

means for setting a target code amount; and

transform means for performing a predetermined orthogonal transform; and characterised in that said apparatus comprises

limit-value generating means for deriving a difference between the predicted code amount and the target code amount, and outputting a band limiting value corresponding to the difference; and

prefiltering means for limiting the frequency band of the input image data according to said band limiting value, and for outputting band limited image data to said transform means; and said predicted amount generating means comprises

processing means for subjecting one frame of said input image data to a predetermined pixel filtering process, and for outputting the resulting filtered data; and

calculating means for executing a predetermined calculation on said filtered data and outputting an activity value, said predetermined calculation including at least an addition carried out over all of the filtered data corresponding to one frame; and

means for converting said activity value into a corresponding predicted code amount.

## BRIEF DESCRIPTION OF THE DRAWINGS

Fig. 1 is a block diagram of a data compression apparatus according to a first embodiment of this invention.

Fig. 2 is a block diagram of the code-amount predictive device of Fig. 1.

Fig. 3 is a diagram showing matrixes of filtering coefficients used in the code-amount predictive device of Fig. 2.

Fig. 4 is a diagram showing the relation between an addition result and a code amount in the code-amount predictive device of Fig. 2.

Fig. 5 is a diagram showing varying characteristics of the prefilter of Fig. 1.

Fig. 6 is a block diagram of a prefilter in a data compression apparatus according to a second embodiment of this invention.

Fig. 7 is a diagram showing a characteristic of the filter element in the prefilter of Fig. 6.

Fig. 8 is a block diagram of a data compression apparatus according to a third embodiment of this invention. Fig. 9 is a block diagram of the code-amount predictive device of Fig. 8.

Fig. 10 is a diagram showing successive frames in the data compression apparatus of Fig. 8.

Fig. 11 is a diagram showing target code amounts and actual code amounts in the data compression apparatus of Fig. 8.

Fig. 12 is a diagram showing target code amounts and actual code amounts in the data compression apparatus of Fig. 8.

Fig. 13 is a block diagram of a data compression apparatus according to a fifth embodiment of this invention.

Fig. 14 is a block diagram of the code-amount predictive device of Fig. 13.

Fig. 15 is a diagram showing matrixes of filtering coefficients used in the code-amount predictive device of Fig. 14.

Fig. 16 is a diagram showing matrixes of filtering coefficients used in the code-amount predictive device of Fig. 14.

Fig. 17 is a diagram showing the relation among a horizontal-direction band limiting value, a vertical-direction band limiting value, and a code-amount reduction rate in the data compression apparatus of Fig. 13.

Fig. 18 is a block diagram of a code-amount predictive device in a data compression apparatus according to a seventh embodiment of this invention.

Fig. 19 is a diagram showing characteristics of filtering processes executed in the code-amount predictive device of Fig. 18.

## DESCRIPTION OF THE FIRST PREFERRED EMBODIMENT

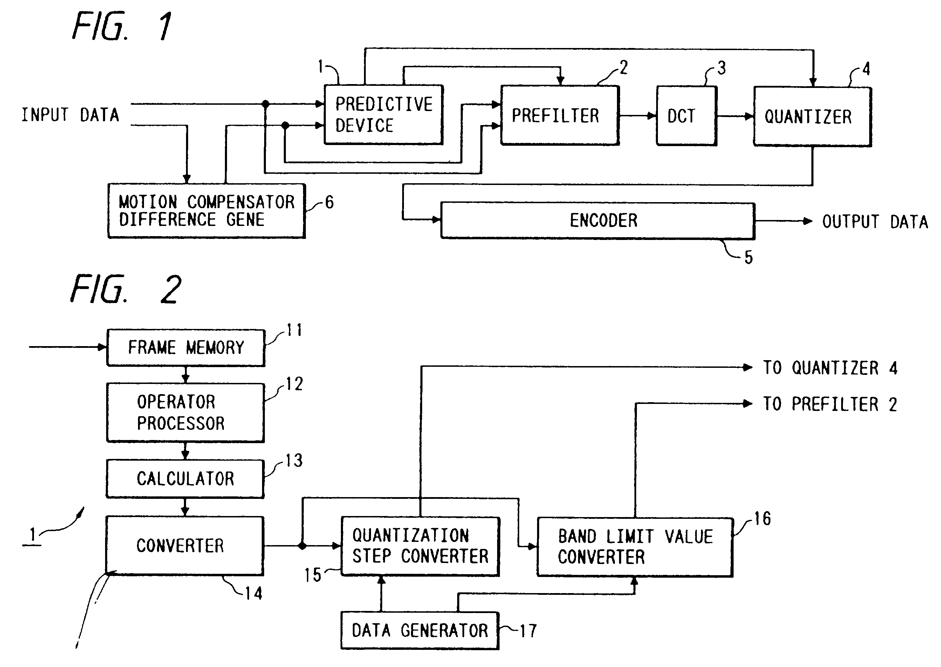

With reference to Fig. 1, input image data are fed to a code-amount predictive device 1 and a prefilter 2 via a device 6 composed of a motion compensator and a difference-data generator (an error-data generator). The input image data may be directly fed to the code-amount predictive device 1 and the prefilter 2. The code-amount predictive device 1 predicts the amount of codes on the basis of the input image data, and determines a band limiting value and a quantization step size in response to the predicted code amount and outputs data of the determined band limiting value and the determined quantization step size to the prefilter 2 and a quantizer 4 respectively.

The device 6 subjects the input image data to a motion compensating process, and generates data representative of a difference (an error) between inter-frame predicted image data and reference image data. The difference data are outputted from the device 6 to the code-amount predictive device 1 and the prefilter 2 as image data.

The prefilter 2 limits the band of the image data in response to the band limiting value fed from the code-amount predictive device 1. Output image data from the prefilter 2 are fed to an orthogonal transform device 3 including a discrete cosine transform (DCT) circuit. The image data are subjected to DCT by the DCT circuit 3. Output image data (transform coefficients) from the DCT circuit 3 are fed to the quantizer 4. The quantizer 4 quantizes the image data with the quantization step size fed from the code-amount predictive device 1. Output image data from the quantizer 4 are fed to an encoder 5 and are converted by the encoder 5 into given-format code such as zero run length code, Huffman code, or both zero run length code and Huffman code. The output coded data from the encoder 5 are transmitted, or recorded into a recording medium (not shown) via a suitable device (not shown).

As shown in Fig. 2, the code-amount predictive device 1 includes a frame memory 11 into which the input image data are supplied directly or through the device 6 and temporarily stored. The image data are read out from the frame memory 11 and are then fed to an operator processor 12. The image data are subjected to a predetermined filtering process by the operator processor 12. Output image data from the operator processor 12 are fed to a calculator 13. The calculator 13 calculates the absolute values of the image data and sums the absolute values. Output image data from the calculator 13 are fed to a code-amount converter 14. The code-amount converter 14 converts the output image data of the calculator 13 into a predicted code amount which will be obtained at a standard quantization step size and a standard band limiting value. Data representing the predicted code amount are outputted from the code-amount converter 14 to a quantization step converter 15 and a band limiting value converter 16.

A data generator 17 outputs data representing a target code amount. The output data from the data generator 17 are fed to the quantization step converter 15 and the band liming value converter 16. The quantization step converter 15 compares the predicted code amount and the target code amount, and determines a quantization step size in response to the error between the predicted code amount and the target code amount. Data representing the determined quantization step size are outputted from the quantization step converter 15 to the quantizer 4. The band liming value converter 16 compares the predicted code amount and the target code amount, and determines a band liming value in response to the error between the predicted code amount and the target code amount. Data representing the determined band limiting value are outputted from the band limiting value converter 16 to the prefilter 2.

The code-amount predictive device 1 will be further described. The input image data corresponding to one frame are temporarily stored into the frame memory 11. The image data are read out from the frame memory 11 and are then fed to the operator processor 12. The image data are subjected to the predetermined filtering process by the operator processor 12.

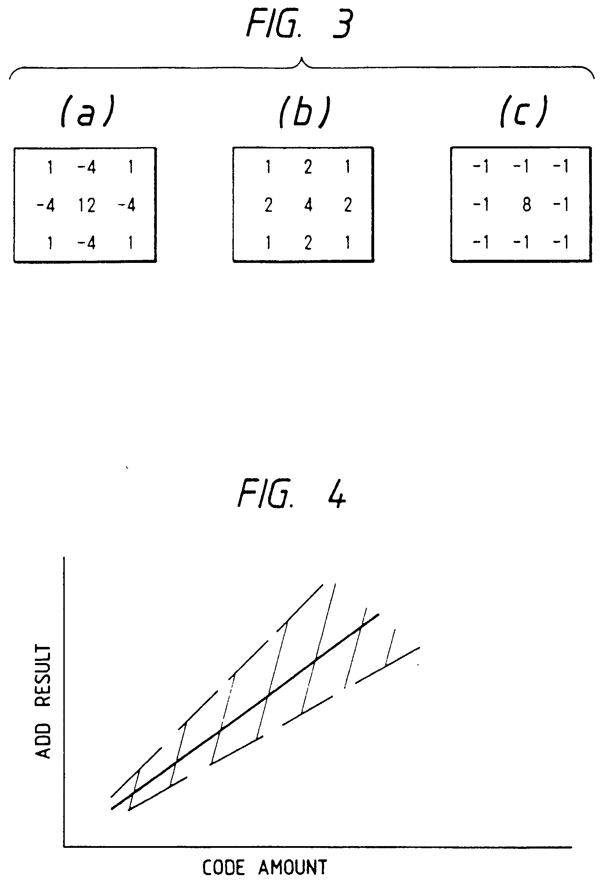

Specifically, the predetermined filtering process executed by the operator processor 12 is selected from a high-pass filtering process, a low-pass filtering process, and a Laplacian filtering process. The high-pass filtering process, the low-pass filtering process, and the Laplacian filtering process are performed by using matrixes of $3 \times 3$ coefficients (coefficients arranged in $3 \times 3$) shown in the parts (a), (b), and (c) of Fig. 3 respectively. During the filtering process executed by the operator processor 12, $3 \times 3$ pixel data composing a $3 \times 3$ pixel region of one frame are read out from the frame memory 11 and are then multiplied by the $3 \times 3$ coefficients respectively, and the $3 \times 3$ data which result from the multiplication are summed. As a result, the filtering process is completed for the data composing the $3 \times 3$ pixel region. Then, the data reading region is shifted rightward by one pixel for example, and $3 \times 3$ pixel data composing the shifted region are read out from the frame memory 11 and are subjected to similar multiplication and summing calculation. As a result, the filtering process is completed for the data composing the subsequent $3 \times 3$ pixel region. Such processes are reiterated to complete the filtering processing of all the data corresponding to one frame. It should be noted that the data reading region may be shifted by two pixels, three pixels, or a number of more than three pixels. The operator processor 12 outputs one data representative of the result of summing calculation each time a filtering process for $3 \times 3$ pixel data is completed.

The calculator 13 receives the output data from the operator processor 12 which represent the results of summing calculation. The calculator 13 calculates the absolute values of the summing-calculation results, and adds the calculated absolute values corresponding to one frame. As shown in Fig. 4, the result of the addition of the absolute values is approximately proportional to the code amount. Specifically, with respect to a given result of the addition, the amount of codes of the image data lies in the hatched range of Fig. 4.

It should be noted that the calculator 13 may be modified as follows. A first modified calculator 13 calculates the squares of the summing-calculation results, and adds the calculated squares. A second modified calculator 13 calculates the squares of the summing-calculation results, and adds the calculated squares and calculates an average of the result of the addition.

The code-amount converter 14 receives the output data from the calculator 13 which represent the result of the addition executed by the calculator 13. The code-amount converter 14 includes a ROM storing data representative of a predicted code amount which varies as a function of an addition result. Specifically, the predicted code amount is equal to an average value of a code amount. The average value of the code amount is predetermined so as to correspond to the solid line in Fig. 4 which agrees with the center of the hatched range of Fig. 4. The code-amount converter 14 determines a predicted code amount in response to the addition result by referring to the data stored in the ROM. The output data from the code-amount converter 14 which represents the predicted code amount are fed to the quantization step converter 15 and the band limiting value converter 16.

The data generator 17 includes a ROM storing data representing a target code amount. The output data from the data generator 17 which represent the target code amount are fed to the the quantization step converter 15 and the band limiting value converter 16.

The quantization step converter 15 includes a comparator or a subtracter which compares the predicted code amount and the target code amount to calculate the error between the predicted code amount and the target code amount. The quantization step converter 15 also includes a ROM storing data representative of a desired quantization step size which varies as a function of an error between a predicted code amount and a target code amount. The desired quantization step size is chosen so that an actual code amount can be equal to the target code amount. The quantization step converter 15 determines the desired quantization step size in response to the error between the predicted code amount and the target code amount by referring to the data stored in the ROM. The output data from the quantization step converter 15 which represent the desired quantization step size are fed to the quantizer 4.

The band liming value converter 16 includes a comparator or a subtracter which compares the predicted code amount and the target code amount to calculate the error between the predicted code amount and the target code amount. The band liming converter 16 also includes a ROM storing data representative of a desired band limiting value which varies as a function of an error between a predicted code amount and a target code amount. The desired band limiting value is chosen so that an actual code amount can be equal to the target code amount. The band limiting value converter 16 determines the desired band limiting value in response to the error between the predicted code amount and the target code amount by referring to the data stored in the ROM. The output data from the band limiting value converter 16 which represent the desired band limiting value are fed to the prefilter 2.

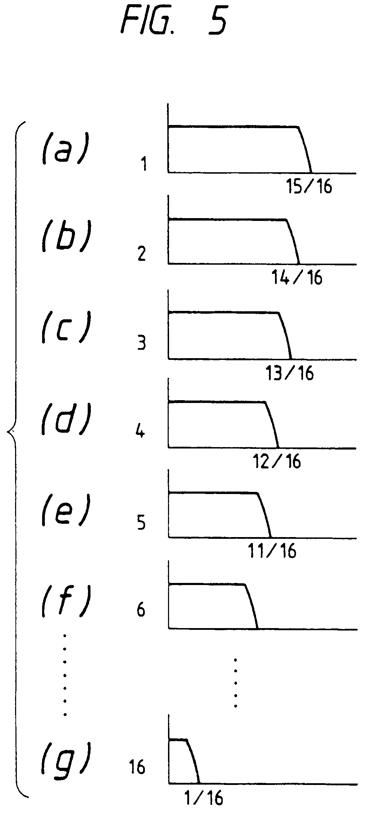

The prefilter 2, the DCT circuit 3, the quantizer 4, and the encoder 5 will be further described. The prefilter 2 has a band limiting characteristic variable among 16 different types, some of which are shown in the parts (a)-(g) of Fig. 5. The 16 types are defined by band limiting factors (cut-off frequencies) of 15/16 ~ 1/16 with respect to a reference value respectively. The band limiting characteristic of the prefilter 2 is selected from the 16 different types in response to the desired band limiting value fed from the band limiting value converter 16. The input image data are processed by the prefilter 2 with the selected band limiting characteristic. The band-limited output data from the prefilter 2 are fed to the DCT circuit 3.

The DCT circuit 3 separates one-frame output image data from the prefilter 2 into blocks. The image data are subjected by the DCT circuit 3 to DCT for each of the blocks. Output data from the DCT circuit 3 are fed to the quantizer 4. The quantizer 4 quantizes the image data with the quantization step size fed from the code-amount predictive device 1. Output image data from the quantizer 4 are fed to the encoder 5 and are converted by the encoder 5 into given-format code such as zero run length code, Huffman code, or both zero run length code and Huffman code. The output coded data from the encoder 5 are transmitted, or recorded into a recording medium (not shown) via a suitable device (not shown).

## DESCRIPTION OF THE SECOND PREFERRED EMBODIMENT

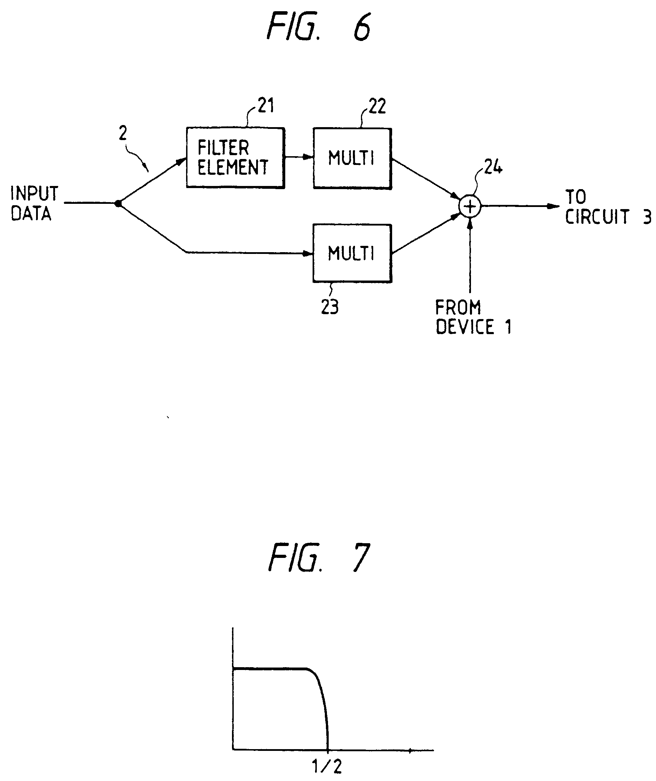

Figs. 6 and 7 relate to a second embodiment of this invention which is similar to the embodiment of Figs. 1-5 except for design changes indicated hereinafter. In the second embodiment, as shown in Fig. 6, a prefilter 2 includes a filter element 21, multipliers 22 and 23, and an adder 24.

As shown in Fig. 7, the filter element 21 has a predetermined band limiting characteristic which is defined by a band limiting factor (a cut-off frequency) of 1/2 with respect to a reference value. Image data inputted into the prefilter 2 are subjected to a band limiting process by the filter element 21. Output image data from the filter element 21 are fed to the multipliers 22 and 23.

The multiplier 22 multiplies the image data and a coefficient. The coefficient in the multiplier 22 is varied in accordance with the level represented by the image data. Specifically, the coefficient in the multiplier 22 is equal to 0/16, 1/16, 2/16, ···, 16/16 for levels of 0, 1, 2, ···, 16 respectively.

The multiplier 23 multiplies the image data and a coefficient. The coefficient in the multiplier 23 is varied in accordance with the level represented by the image data. Specifically, the coefficient in the multiplier 23 is equal to 16/16, 15/16, 14/16, ···, 0/16 for levels of 0, 1, 2, ···, 16 respectively.

Output data from the multipliers 22 and 23 are fed to the adder 24 and are added by the adder 24. Specifically, the adder 24 includes a weighting section which weights the output data from the multipliers 22 and 23 with weighting factors prior to the execution of the addition. The weighting factors are controlled by a band limiting value fed from a code-amount predictive device 1. Then, the weighted output data from the multipliers 22 and 23 are added. In this way, the ratio between the output data from the multipliers 22 and 23 is varied in accordance with the band limiting value before the execution of the addition, so that the filtering characteristic of the prefilter 2 is changed in response to the band limiting value. Output data from the adder 24 are fed to a DCT circuit 3 as output data from the prefilter 2.

## DESCRIPTION OF THE THIRD PREFERRED EMBODIMENT

In general, input image data are of two types to be exposed to intra-frame data processing and inter-frame data processing respectively.

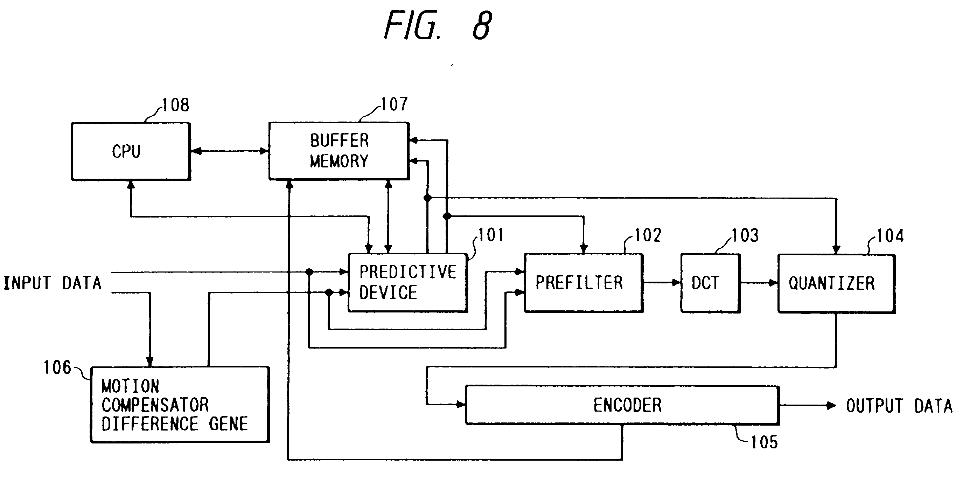

With reference to Fig. 8, input image data of the inter-frame type are fed to a code-amount predictive device 101 and a prefilter 102 via a device 106 composed of a motion compensator and a difference-data generator (an error-data generator). Input image data of the intra-frame type are directly fed to the code-amount predictive device 101 and the prefilter 102. The code-amount predictive device 101 predicts the amount of codes on the basis of the input image data, determines a band limiting value and a quantization step size in response to the predicted code amount, and outputs data of the determined band limiting value and the determined quantization step size to the prefilter 102 and a quantizer 104 respectively.

The device 106 subjects the input image data to a motion compensating process, and generates data representative of a difference (an error) between inter-frame predicted image data and reference image data. The difference data are outputted from the device 106 to the code-amount predictive device 101 and the prefilter 102 as image data.

The prefilter 102 limits the band of the image data in response to the band limiting value fed from the code-amount predictive device 101. Output image data from the prefilter 102 are fed to an orthogonal transform device 103 including a discrete cosine transform (DCT) circuit. The image data are subjected to DCT by the DCT circuit 103. Output image data from the DCT circuit 103 are fed to the quantizer 104. The quantizer 104 quantizes the image data with the quantization step size fed from the code-amount predictive device 101. Output image data from the quantizer 104 are fed to an encoder 105 and are converted by the encoder 105 into given-format code such as zero run length code, Huffman code, or both zero run length code and Huffman code. The output coded data from the encoder 105 are transmitted, or recorded into a recording medium (not shown) via a suitable device (not shown).

A buffer memory 107 is connected to the code-amount predictive device 101 and the encoder 105. The buffer memory 107 stores output data from the code-amount predictive device 101 and the encoder 105. The buffer memory 107 feeds necessary data to the code-amount predictive device 101. The code-amount predictive device 101 and the buffer memory 107 are connected to a CPU 108. The code-amount predictive device 101 and the buffer memory 107 are controlled by the CPU 108.

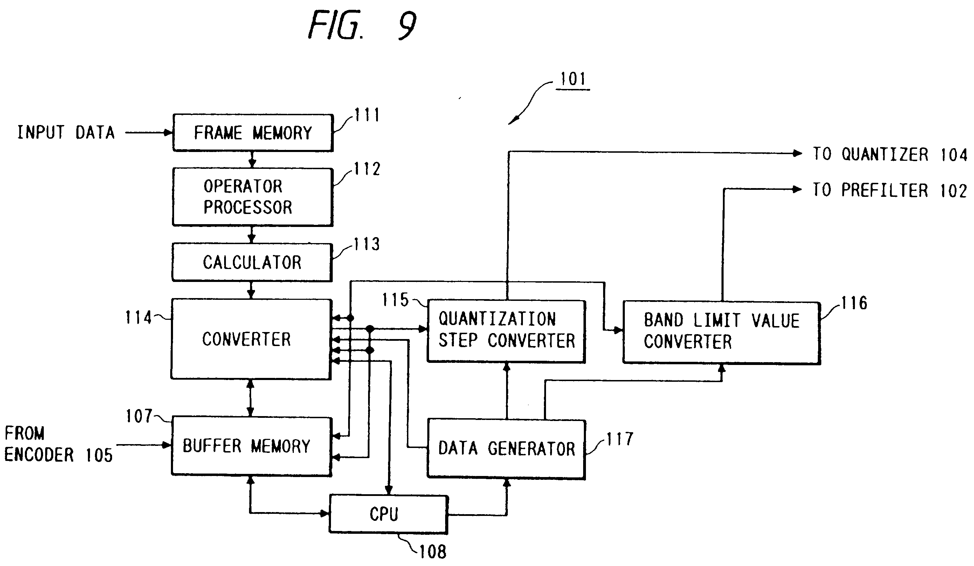

As shown in Fig. 9, the code-amount predictive device 101 includes a frame memory 111 into which the input image data are temporarily stored. The image data are read out from the frame memory 111 and are then fed to an operator processor 112. The image data are subjected to a predetermined filtering process by the operator processor 112. Output image data from the operator processor 112 are fed to a calculator 113. The calculator 113 calculates the absolute values of the image data and sums the absolute values to obtain an activity value. Output image data from the calculator 113 which represent the activity value are fed to a code-amount converter 114. The code-amount converter 114 converts the activity value into a predicted code amount which will be obtained at a standard quantization step size and a standard band limiting value. Data representing the predicted code amount are outputted from the code-amount converter 114 to a quantization step converter 115 and a band limiting value converter 116.

A data generator 117 is controlled by the CPU 108 to output data representing a target code amount. The output data from the data generator 117 are fed to the quantization step converter 115 and the band liming value converter 116. The quantization step converter 115 compares the predicted code amount and the target code amount, and determines a quantization step size in response to the error between the predicted code amount and the target code amount. Data representing the determined quantization step size are outputted from the quantization step converter 115 to the quantizer 104. The band liming value converter 116 compares the predicted code amount and the target code amount, and determines a band liming value in response to the error between the predicted code amount and the target code amount. Data representing the determined band limiting value are outputted from the band limiting value converter 116 to the prefilter 102.

The code-amount predictive device 101 will be further described. The input image data corresponding to one frame are temporarily stored into the frame memory 111. The image data are read out from the frame memory 111 and are then fed to the operator processor 112. The image data are subjected to the predetermined filtering process by the operator processor 112.

Specifically, the predetermined filtering process executed by the operator processor 112 is selected from a high-pass filtering process, a low-pass filtering process, and a Laplacian filtering process. The high-pass filtering process, the low-pass filtering process, and the Laplacian filtering process are performed by using matrixes of $3 \times 3$ coefficients shown in the parts (a), (b), and (c) of Fig. 3 respectively. During the filtering process executed by the operator processor 112, $3 \times 3$ pixel data composing a $3 \times 3$ pixel region of one frame are read out from the frame memory 111 and are then multiplied by the $3 \times 3$ coefficients respectively, and the $3 \times 3$ data which result from the multiplication are summed. As a result, the filtering process is completed for the data composing the $3 \times 3$ pixel region. Then, the data reading region is shifted rightward by one pixel for example, and $3 \times 3$ pixel data composing the shifted region are read out from the frame memory 111 and are subjected to similar multiplication and summing calculation. As a result, the filtering

6

process is completed for the data composing the subsequent $3 \times 3$ pixel region. Such processes are reiterated to complete the filtering processing of all the data corresponding to one frame. It should be noted that the data reading region may be shifted by two pixels, three pixels, or a number of more than three pixels. The operator processor 112 outputs one data representative of the result of summing calculation each time a filtering process for $3 \times 3$ pixel data is completed.

The calculator 113 receives the output data from the operator processor 112 which represent the results of summing calculation. The calculator 113 calculates the absolute values of the summing-calculation results, and adds the calculated absolute values corresponding to one frame. The result of the addition of the absolute values agrees with an activity value. As shown in Fig. 4, the result of the addition of the absolute values, that is, the activity value, is approximately proportional to the code amount. Specifically, with respect to a given result of the addition (a given activity value), the amount of codes of the image data lies in the hatched range of Fig. 4.

It should be noted that the calculator 113 may be modified as follows. A first modified calculator 113 calculates the squares of the summing-calculation results, and adds the calculated squares. A second modified calculator 113 calculates the squares of the summing-calculation results, and adds the calculated squares and calculates an average of the result of the addition.

The code-amount converter 114 receives the output data from the calculator 113 which represent the activity value or the result of the addition executed by the calculator 113. The code-amount converter 114 includes a ROM storing data representative of a predicted code amount which varies as a function of an addition result. Specifically, the predicted code amount is equal to an average value of a code amount. The average value of the code amount is predetermined so as to correspond to the solid line in Fig. 4 which agrees with the center of the hatched range of Fig. 4. The code-amount converter 114 determines a predicted code amount in response to the addition result (the activity value) by referring to the data stored in the ROM. The output data from the code-amount converter 114 which represents the predicted code amount are fed to the quantization step converter 115 and the band limiting value converter 116.

The code-amount converter 114 will be further described. The amounts of codes are previously calculated which are generated when image data representing various picture patterns are limited in band with a standard band limiting value (A=0) and are quantized with a standard quantization step size (F=50). The code-amount converter 114 stores such previously-calculated code amounts as data designed such that an activity value and a code amount correspond to each other in a one-to-one manner.

During the encoding of image data of the first frame or the first field for which any previous data are absent, the code-amount converter 114 executes the following calculation.

$$BID(50,0) = ACT \times k$$

where BID(50,0) denotes a predicted code amount with respect to the standard quantization step size (F=50) and the standard band limiting value (A=0), and ACT denotes an 5 activity value and "k" denotes a predetermined constant. In other words, the code-amount converter 114 calculates the predicted code amount BID(50,0) by multiplying the constant "k" and the activity value ACT outputted from the calculator 113.

During the encoding of image data of the second and later frames and fields, the code-amount converter 114 executes the following calculation.

$$BID(50,0) = ACT \times (BID^{-1}(F,A)/TGT) \times (BID^{-1}(50,0)/ACT^{-1})$$

where $BID^{-1}(50,0)$ denotes a preceding predicted code amount with respect to the standard quantization step size (F=50) and the standard band limiting value (A=0); $BID^{-1}(F,A)$ denotes a preceding actual code amount with respect to a preceding quantization step size (F) and a preceding band limiting value (A); $ACT^{-1}$ denotes a preceding activity value; and TGT denotes a target code amount. Data representing the preceding predicted code amount $BID^{-1}(50,0)$, data representing the preceding activity value $ACT^{-1}$, and data representing the preceding actual code amount $BID^{-1}$ (F,A) are fed to the code-amount converter 114 from the buffer memory 107. For this purpose, when the predicted code amount BID(50,0) is calculated, the code-amount converter 114 stores data of the predicted code amount BID(50,0) and the current activity value ACT into the buffer memory 107 for later use in a next operation cycle as a preceding predicted code amount $BID^{-1}(50,0)$ and a preceding activity value $ACT^{-1}$, respectively. Furthermore, the encoder 105 stores data of a current actual code amount BID(F,A) into the buffer memory 107 for later use in a next operation cycle as a preceding actual code amount $BID^{-1}(F,A)$. Data representing the target code amount TGT are fed to the code-amount converter 114 from the data generator 117.

In the previously-mentioned equation, the term "$BID^{-1}(F,A)/TGT$" is a feedback part for decreasing an error between an actual code amount and the target code amount while the term "$BID^{-1}(50,0)/ACT^{-1}$" is a feedback part which is introduced on the basis of a close correlation between a preceding operation cycle and a current operation cycle and which includes the preceding inclination within the hatched range of Fig. 4.

The data generator 117 includes a ROM storing data representing a target code amount. The output data from the data generator 117 which represent the target code amount are fed to the the quantization step converter 115 and the band limiting value converter 116.

The quantization step converter 115 includes a comparator or a subtracter which compares the predicted code amount and the target code amount to calculate the error between the predicted code amount and the target code amount. The quantization step converter 115 also includes a ROM storing data representative of a desired quantization step size which varies as a function of an error between a predicted code amount and a target code amount. The desired quantization step size is chosen so that an actual code amount can be equal to the target code amount. The quantization step converter 115 determines the desired quantization step size in response to the error between the predicted code amount and the target code amount by referring to the data stored in the ROM. The output data from the quantization step converter 115 which represent the desired quantization step size are fed to the quantizer 104.

The band liming value converter 116 includes a comparator or a subtracter which compares the predicted code amount and the target code amount to calculate the error between the predicted code amount and the target code amount. The band liming converter 116 also includes a ROM storing data representative of a desired band limiting value which varies as a function of an error between a predicted code amount and a target code amount. The desired band limiting value is chosen so that an actual code amount can be equal to the target code amount. The band limiting value converter 116 determines the desired band limiting value in response to the error between the predicted code amount and the target code amount by referring to the data stored in the ROM. The output data from the band limiting value converter 116 which represent the desired band limiting value are fed to the prefilter 102.

The prefilter 102, the DCT circuit 103, the quantizer 104, and the encoder 105 will be further described. The prefilter 102 has a band limiting characteristic variable among 16 different types, some of which are shown in the parts (a)-(g) of Fig. 5. The 16 types are defined by band limiting factors (cut-off frequencies) of 15/16 ~ 1/16 with respect to a reference value respectively. The band limiting characteristic of the prefilter 102 is selected from the 16 different types in response to the desired band limiting value fed from the band limiting value converter 116. The input image data are processed by the prefilter 102 with the selected band limiting characteristic. The band-limited output data from the prefilter 102 are fed to the DCT circuit 103.

The DCT circuit 103 separates one-frame output image data from the prefilter 102 into blocks. The image data are subjected by the DCT circuit 103 to DCT for each of the blocks. Output data from the DCT circuit 103 are fed to the quantizer 104. The quantizer 104 quantizes the image data with the quantization step size fed from the code-amount predictive device 101. Output image data from the quantizer 104 are fed to the encoder 105 and are converted by the encoder 105 into given-format code such as zero run length code, Huffman code, or both zero run length code and Huffman code. The output coded data from the encoder 105 are transmitted, or recorded into a recording medium (not shown) via a suitable device (not shown).

Frames represented by image data are of two types subjected to intra-frame data processing and inter-frame data processing respectively, and the frames of the two types will be referred to as intra-frames and inter-frames respectively. A switch or switches (not shown) are provided for selecting one of intra-frame processing and inter-frame processing with respect to the input image data. The CPU 108 controls the selection switches to selectively subjecting successive frames to intra-frame data processing and inter-frame data processing in a predetermined sequence. In other words, the CPU 108 makes successive frames into intra-frames and inter-frames in a predetermined sequence.

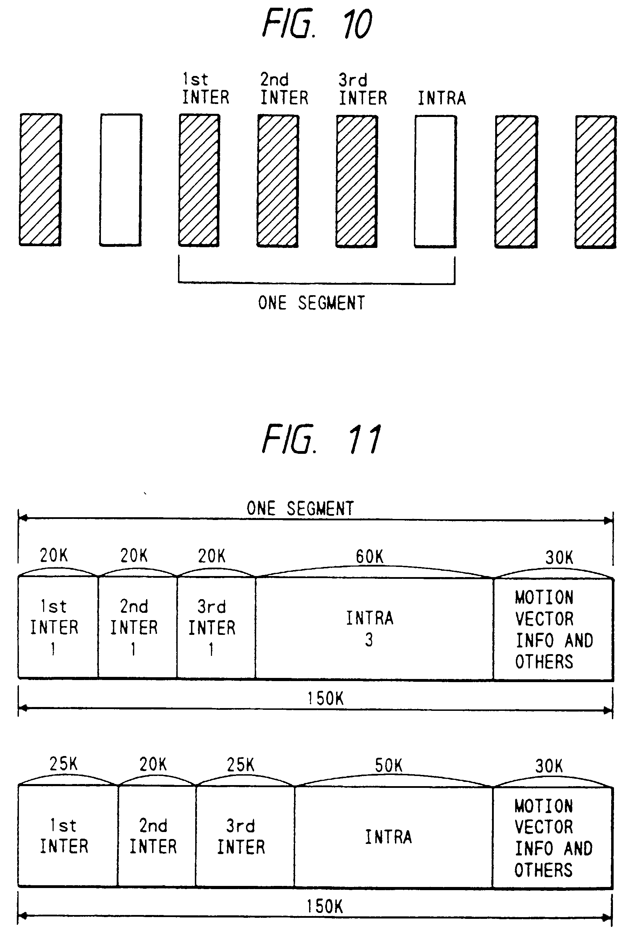

Fig. 10 shows an example of the frame arrangement realized by the operation of the CPU 108. As shown in Fig. 10, four successive frames are grouped into a segment. The first, second, and third frames of a segment are inter-frames while the fourth frame of a segment is an intra-frame.

As shown in Fig. 11, a segment has normal image information in the first frame to the fourth frame and also added information such as motion-vector information. A description will be given of an example where, as shown in the upper part of Fig. 11, a target total amount of codes in a current segment (a target total number of bits in a current segment) is 150 Kbits. It is now assumed that the amount of codes of added information such as motion-vector information in a preceding frame is 30 Kbits. The CPU 108 estimates the amount of codes of added information in the current frame as being equal to the amount of codes of added information in the preceding frame. Thus, the CPU 108 subtracts 30 Kbits from 150 Kbits and allot the remaining 120 Kbits to normal image data in the first frame to the fourth frame of the current segment.

The CPU 108 calculates the ratio among the activity values of the first frame to the fourth frame which are outputted from the calculator 113. When the ratio is "1:1:1:3" for example, the CPU 108 allots 20 Kbits, 20 Kbits, 20 Kbits, and 60 Kbits to the first frame, the second frame, the third frame, and the fourth frame as target code amounts respectively. Data representing these target code amounts are outputted from the CPU 108 to the data generator 117. As a result, the image data in each of the first frame to the third frame are encoded with a target code amount of 20 Kbits.

In general, the target code amount in the fourth frame is modified as follows. The CPU 108 monitors the actual code amount by referring to the output signal from the encoder 105 via the buffer memory 107. The CPU 108 accumulates the errors between the target code amounts and the actual code amounts in the first frame to the third frame, and corrects the target code amount in the fourth frame in response to the result of the accumulation of the errors. For example, when the actual code amounts in the first frame, the second frame, and the third frame are 25 Kbits, 20 Kbits, and 25 Kbits respectively as shown in the lower part of Fig. 11, that is, when the error between the target code amounts and the actual code amounts in the first frame, the second frame, and the third frame are 5 Kbits, 0 Kbits, and 5 Kbits respectively, the CPU 108 corrects the target code amount in the fourth frame into 50 Kbits.

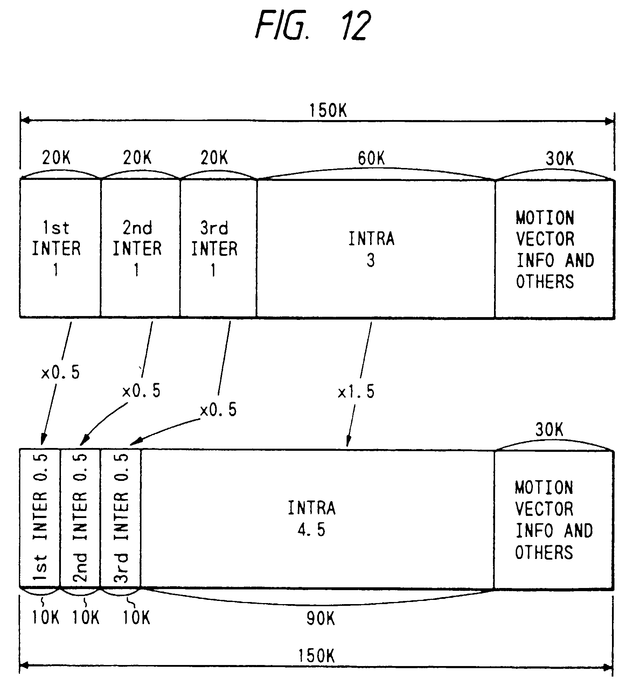

As shown in Fig. 12, the target code amounts in the first frame to the fourth frame may be modified by a process of weighting the ratio among the activity values of the first frame to the fourth frame. When the ratio is "1:1:1:3" for example, the CPU 108 multiplies the target code amounts in the first frame, the second frame, the third frame, and the fourth frame by factors of 0.5, 0.5, 0.5, and 1.5 to modify the target code amounts respectively. The resulting modified target code amounts in the first frame, the second frame, the third frame, and the fourth frame are 10 Kbits, 10 Kbits, 10 Kbits, and 90 Kbits respectively.

## DESCRIPTION OF THE FOURTH PREFERRED EMBODIMENT

A fourth embodiment of this invention is similar to the embodiment of Figs. 8-11 except that a prefilter 102 is designed in agreement with the prefilter 2 of the embodiment of Figs. 6 and 7.

## DESCRIPTION OF THE FIFTH PREFERRED EMBODIMENT

In general, input image data are of two types to be exposed to intra-frame data processing and inter-frame data processing respectively.

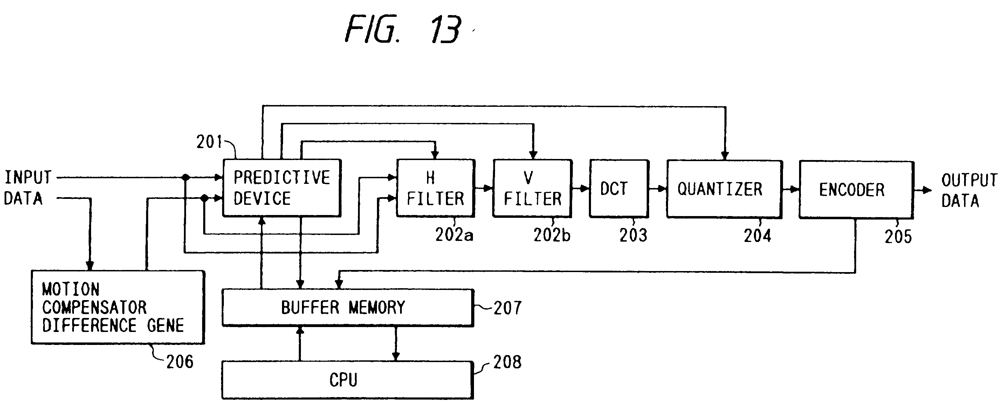

With reference to Fig. 13, input image data of the inter-frame type are fed to a code-amount predictive device 201 and a horizontal-direction prefilter 202a via a device 206 composed of a motion compensator and a difference-data generator (an error-data generator). Input image data of the intra-frame type are directly fed to the code-amount predictive device 201 and the horizontal-direction prefilter 202a. The code-amount predictive device 201 predicts the amount of codes on the basis of the input image data, and determines a horizontal-direction band limiting value, a vertical-direction band limiting value, and a quantization step size in response to the predicted code amount and outputs data of the determined horizontal-direction band limiting value, the determined vertical-direction band limiting value, and the determined quantization step size to the horizontal-direction prefilter 202a, a vertical-direction prefilter 202b, and a quantizer 204 respectively.

The device 206 subjects the input image data to a motion compensating process, and generates data representative of a difference (an error) between inter-frame predicted image data and reference image data. The difference data are outputted from the device 106 to the code-amount predictive device 201 and the horizontal-direction prefilter 202a as image data.

The horizontal-direction prefilter 202a limits the horizontal-direction band of the image data in response to the horizontal-direction band limiting value fed from the code-amount predictive device 201. Output image data from the horizontal-direction prefilter 202a are fed to the vertical-direction prefilter 202b. The vertical-direction prefilter 202b limits the vertical-direction band of theimage data in response to the vertical-direction band limiting value fed from the code-amount predictive device 201. Output image data from the vertical-direction prefilter 202b are fed to an orthogonal transform device 203 including a discrete cosine transform (DCT) circuit. The image data are subjected to DCT by the DCT circuit 203. Output image data from the DCT circuit 203 are fed to the quantizer 204. The quantizer 204 quantizes the image data with the quantization step size fed from the code-amount predictive device 201. Output image data from the quantizer 204 are fed to an encoder 205 and are converted by the encoder 205 into given-format code such as zero run length code, Huffman code, or both zero run length code and Huffman code. The output coded data from the encoder 205 are transmitted, or recorded into a recording medium (not shown) via a suitable device (not shown).

A buffer memory 207 is connected to the code-amount predictive device 201 and the encoder 205. The buffer memory 207 stores output data from the code-amount predictive device 201 and the encoder 205. The buffer memory 207 feeds necessary data to the code-amount predictive device 201 to execute a feedback process. The code-amount predictive device 201 and the buffer memory 207 are connected to a CPU 208. The code-amount predictive device 201 and the buffer memory 207 are controlled by the CPU 208.

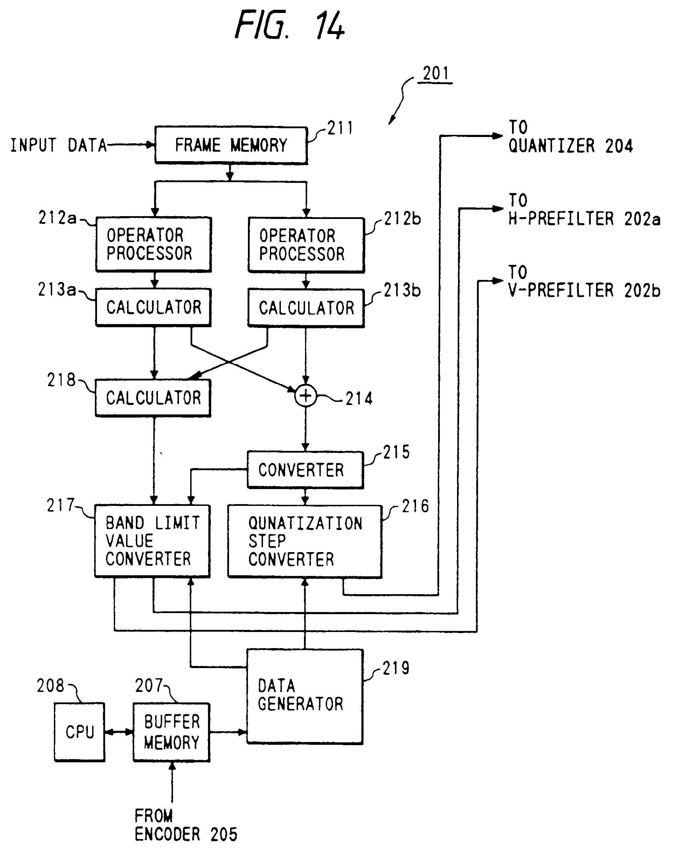

As shown in Fig. 14, the code-amount predictive device 201 includes a frame memory 211 into which the input image data are temporarily stored. The image data are read out from the frame memory 211 and are then fed to a horizontal-direction operator processor 212a and a vertical-direction operator processor 212b. The image data are subjected to a predetermined filtering process by the horizontal-direction operator processor 212a. At the same time, the image data are subjected to a predetermined filtering process by the vertical-direction operator processor 212b. Output image data from the horizontal-direction operator processor 212a are fed to a calculator 213a. The calculator 213a calculates the absolute values of the image data and sums the absolute values. Output image data from the calculator 213a are fed to an adder 214 and a calculator 218. Output image data from the vertical-direction operator processor 212b are fed to a calculator 213b. The calculator 213b calculates the absolute values of the image data and sums the absolute values. Output image data from the calculator 213b are fed to the adder 214 and the calculator 218.

The adder 214 adds the output image data from the calculators 213a and 213b. Output image data from the adder 214 are fed to a code-amount converter 215. The code-amount converter 215 converts the output image data of the adder 214 into a predicted code amount which will be obtained at a standard quantization step size and a standard band limiting value. Data representing the predicted code amount are outputted from the code-amount converter 215 to a quantization step converter 216 and a band limiting value converter 217.

The calculator 218 calculates the ratio between the output image data from the calculators 213a and 213b. Output image data from the calculator 218 which represent the calculated ratio are fed to the band limiting value converter 217.

A data generator 219 is controlled by the CPU 208 to output data representing a target code amount. The output data from the data generator 219 are fed to the quantization step converter 216 and the band limiting value converter 217. The quantization step converter 216 compares the predicted code amount and the target code amount, and determines a quantization step size in response to the error between the predicted code amount and the target code amount. Data representing the determined quantization step size are outputted from the quantization step converter 216 to the quantizer 204. The band liming value converter 217 compares the predicted code amount and the target code amount, and determines a horizontal-direction band liming value and a vertical-direction band limiting value in response to the error between the predicted code amount and the target code amount and the ratio data fed from the calculator 218, which will be described later in detail. Data representing the determined horizontal-direction band limiting value are outputted from the band limiting value converter 217 to the horizontal-direction prefilter 202a. Data representing the determined vertical-direction band limiting value are outputted from the band limiting value converter 217 to the vertical-direction prefilter 202b.

The code-amount predictive device 201 will be further described. The input image data corresponding to one frame are temporarily stored into the frame memory 211. The image data are read out from the frame memory 211 and are then fed to the horizontal-direction operator processor 212a and the vertical-direction operator processor 212b. The image data are subjected to the predetermined filtering process by the horizontal-direction operator processor 212a. At the same time, the image data are subjected to the predetermined filtering process by the vertical-direction operator processor 212b.

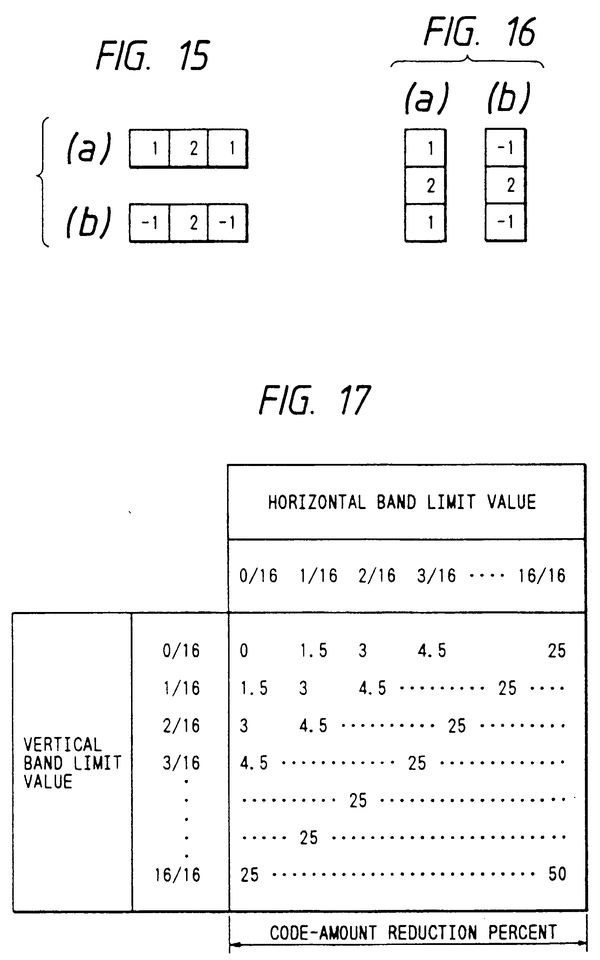

Specifically, the predetermined filtering process executed by the horizontal-direction operator processor 212a is selected from a low-pass filtering process and a high-pass filtering process. The low-pass filtering process and the high-pass filtering process are performed by using matrixes (vectors) of $1 \times 3$ coefficients shown in the parts (a) and (b) of Fig. 15 respectively. During the filtering process executed by the horizontal-direction operator processor 212a, $1 \times 3$ pixel data composing a $1 \times 3$ pixel region of one frame are read out from the frame memory 211 and are then multiplied by the $1 \times 3$ coefficients respectively, and the $1 \times 3$ data which result from the multiplication are summed. As a result, the filtering process is completed for the data composing the $1 \times 3$ pixel region. Then, the data reading region is shifted rightward by one pixel for example, and $1 \times 3$ pixel data composing the shifted region are read out from the frame memory 211 and are subjected to similar multiplication and summing calculation. As a result, the filtering process is completed for the data composing the subsequent $1 \times 3$ pixel region. Such processes are reiterated to complete the filtering processing of all the data corresponding to one frame. It should be noted that the data reading region may be shifted by two pixels, three pixels, or a number of more than three pixels. The horizontal-direction operator processor 212a outputs one data representative of the result of summing calculation each time a filtering process for $1 \times 3$ pixel data is completed.

The predetermined filtering process executed by the vertical-direction operator processor 212b is selected from a low-pass filtering process and a high-pass filtering process. The low-pass filtering process and the high-pass filtering process are performed by using matrixes (vectors) of $3 \times 1$ coefficients shown in the parts (a) and (b) of Fig. 16 respectively. During the filtering process executed by the vertical-direction operator processor 212b, $3 \times 1$ pixel data composing a $3 \times 1$ pixel region of one frame are read out from the frame memory 211 and are then multiplied by the $3 \times 1$ coefficients respectively, and the $3 \times 1$ data which result from the multiplication are summed. As a result, the filtering process is completed for the data composing the $3 \times 1$ pixel region. Then, the data reading region is shifted rightward by one pixel for example, and $3 \times 1$ pixel data composing the shifted region are read out from the frame memory 211 and are subjected to similar multiplication and summing calculation. As a result, the filtering process is completed for the data composing the subsequent $3 \times 1$ pixel region. Such processes are reiterated to complete the filtering processing of all the data corresponding to one frame. It should be noted that the data reading region may be shifted by two pixels, three pixels, or a number of more than three pixels. The vertical-direction operator processor 212b outputs one data representative of the result of summing calculation each time a filtering process for $3 \times 1$ pixel data is completed.

The calculator 213a receives the output data from the horizontal-direction operator processor 212a which represent the results of summing calculation. The calculator 213a calculates the absolute values of the summing-calculation results, and adds the calculated absolute values corresponding to one frame. The output data from the calculator 213a which represent the addition result are fed to the adder 214.

The calculator 213b receives the output data from the vertical-direction operator processor 212b which represent the results of summing calculation. The calculator 213b calculates the absolute values of the summing-calculation results, and adds the calculated absolute values corresponding to one frame. The output data from the calculator 213b which represent the addition result are fed to the adder 214.

It should be noted that the calculator 213a and 213b may be modified as follows. A first modified calculator 213a or 213b calculates the squares of the summing-calculation results, and adds the calculated squares. A second modified calculator 213a or 213b calculates the squares of the summing-calculation results, and adds the calculated squares and calculates an average of the result of the addition.

The output data from the calculators 213a and 213b are added by the adder 214. As shown in Fig. 4; the result of the addition executed by the adder 214 is approximately proportional to the code amount. Specifically, with respect to a given result of the addition, the amount of codes of the image data lies in the hatched range of Fig. 4.

The code-amount converter 215 receives the output data from the adder 214. The code-amount converter 215 includes a ROM storing data representative of a predicted code amount which varies as a function of an addition result. Specifically, the predicted code amount is equal to an average value of a code amount. The average value of the code amount is predetermined so as to correspond to the solid line in Fig. 4 which agrees with the center of the hatched range of Fig. 4. The code-amount converter 215 determines a predicted code amount in response to the addition result by referring to the data stored in the ROM. The output data from the code-amount converter 215 which represents the predicted code amount are fed to the quantization step converter 216 and the band limiting value converter 217.

The code-amount converter 215 will be further described. The amounts of codes are previously calculated which are generated when image data representing various picture patterns are limited in band with a standard horizontal-direction band limiting value and a standard vertical-direction band limiting value and are quantized with a standard quantization step size. The code-amount converter 215 stores such previously-calculated code amounts as data designed such that an addition result and a code amount correspond to each other in a one-to-one manner.

The data generator 219 includes a ROM storing data representing a target code amount. The output data from the data generator 219 which represent the target code amount are fed to the the quantization step converter 216 and the band limiting value converter 217.

The quantization step converter 216 includes a comparator or a subtracter which compares the predicted code amount and the target code amount to calculate the error between the predicted code amount and the target code amount. The quantization step converter 216 also includes a ROM storing data representative of a desired quantization step size which varies as a function of an error between a predicted code amount and a target code amount. The desired quantization step size is chosen so that an actual code amount can be equal to the target code amount. The quantization step converter 216 determines the desired quantization step size in response to the error between the predicted code amount and the target code amount by referring to the data stored in the ROM. The output data from the quantization step converter 216 which represent the desired quantization step size are fed to the quantizer 204.

The band liming value converter 217 includes a comparator or a subtracter which compares the predicted code amount and the target code amount to calculate the error between the predicted code amount and the target code amount. The band liming converter 217 also includes a ROM storing data representative of a desired horizontal-direction band limiting value and a desired vertical-direction band limiting value which vary as functions of an error between a predicted code amount and a target code amount. The desired horizontal-direction band limiting value and the desired vertical-direction band limiting value are chosen so that an actual code amount can be equal to the target code amount. The band limiting value converter 217 determines the desired horizontal-direction band limiting value and the desired vertical-direction band limiting value in response to the error between the predicted code amount and the target code amount by referring to the data stored in the ROM. The output data from the band limiting value converter 217 which represent the desired horizontal-direction band limiting value are fed to the horizontal-direction prefilter 202a. The output data from the band limiting value converter 217 which represent the desired vertical-direction band limiting value are fed to the vertical-direction prefilter 202b.

The horizontal-direction prefilter 202a, the vertical-direction prefilter 202b, the DCT circuit 203, the quantizer 204, and the encoder 205 will be further described. Each of the horizontal-direction prefilter 202a and the vertical-direction prefilter 202b has a band limiting characteristic variable among 16 different types, some of which are shown in the parts (a)-(g) of Fig. 5. The 16 types are defined by band limiting factors (cut-off frequencies) of 15/16 ~ 1/16 with respect to a reference value respectively. The band limiting characteristic of the horizontal-direction prefilter 202a is selected from the 16 different types in response to the desired horizontal-direction band limiting value fed from the band limiting value converter 217. The band limiting characteristic of the vertical-direction prefilter 202b is selected from the 16 different types in response to the desired vertical-direction band limiting value fed from the band limiting value converter 217. The input image data are processed by the horizontal-direction prefilter 202a with the selected band limiting characteristic. The band-limited output data from the horizontal-direction prefilter 202a are fed to the vertical-direction prefilter 202b. The output data from the horizontal-direction prefilter 202a are processed by the vertical-direction prefilter 202b with the selected band limiting characteristic. The band-limited output data from the vertical-direction prefilter 202b are fed to the DCT circuit 203.

The relation between the horizontal-direction band limiting value and the vertical-direction band limiting value will be described. By use of a statistical method, the rate of a reduction in the code amount is previously calculated with every combination of varying horizontal-direction and vertical-direction band limiting values. Fig. 17 shows in part the previously-calculated rate of a reduction in the code amount with every combination of horizontal-direction and vertical-direction band limiting values. In Fig. 17, the previously-calculated rate is expressed in unit of percent For example, the 25% code-amount reduction can be realized by 17 different combinations of horizontal-direction and vertical-direction band limiting values. At first, the code-amount reduction rate is determined on the basis of the target code amount. Secondly, one of combinations of horizontal-direction and vertical-direction band limiting values which can realize the determined code-amount reduction rate is selected in response to the ratio data outputted from the calculator 218.

In preparation for the selection of one of combinations of horizontal-direction and vertical-direction band limiting values, the ratio in information amount between the horizontal direction and the vertical direction is estimated by using the ratio data fed from the calculator 218. By use of the result of this estimation, one of combinations of horizontal-direction and vertical-direction band limiting values is selected so that the band limiting value of the direction with a greater information amount will be set lower while the band limiting value of the direction with a smaller information amount will be set higher.

The characters HL and VL are now introduced to represent the horizontal-direction band limiting value and the vertical-direction band limiting value respectively. For example, the ratio between the horizontal-direction band limiting value HL and the vertical-direction band limiting value VL is determined according to the following relation.

$$HL:VL = V/(H+V):H/(H+V)$$

where H denotes the horizontal-direction absolute-value addition result represented by the output data from the calculator 213a, and V denotes the vertical-direction absolute-value addition result represented by the output data from the calculator 213b. In the case where weighting is executed between the horizontal direction and the vertical direction, the ratio between the horizontal-direction band limiting value HL and the vertical-direction band limiting value VL is determined according to the following relation.

$$HL:VL = \alpha V/(H+V):(1-\alpha)H/(H+V)$$

where "$\alpha$" denotes a predetermined constant between 0 and 1.

The DCT circuit 203 separates one-frame output image data from the vertical-direction prefilter 202b into blocks. The image data are subjected by the DCT circuit 203 to DCT for each of the blocks. Output data from the DCT circuit 203 are fed to the quantizer 204. The quantizer 204 quantizes the image data with the quantization step size fed from the code-amount predictive device 201. Output image data from the quantizer 204 are fed to the encoder 205 and are converted by the encoder 205 into given-format code such as zero run length code, Huffman code, or both zero run length code and Huffman code. The output coded data from the encoder 205 are transmitted, or recorded into a recording medium (not shown) via a suitable device (not shown).

## DESCRIPTION OF THE SIXTH PREFERRED EMBODIMENT

A sixth embodiment of this invention is similar to the embodiment of Figs. 13-17 except that both a horizontal-direction prefilter 202a and a vertical-direction prefilter 202b are designed in agreement with the prefilter 2 of the embodiment of Figs. 6 and 7.

## DESCRIPTION OF THE SEVENTH PREFERRED EMBODIMENT

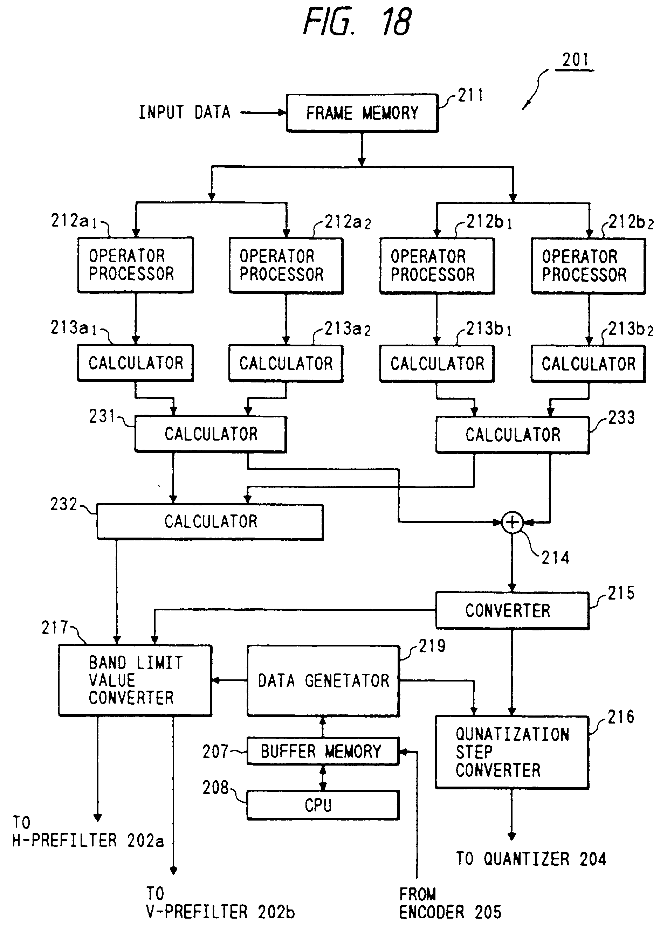

Fig. 18 shows a seventh embodiment of this invention which is similar to the embodiment of Figs. 13-17 except for an internal design of a code-amount predictive device.

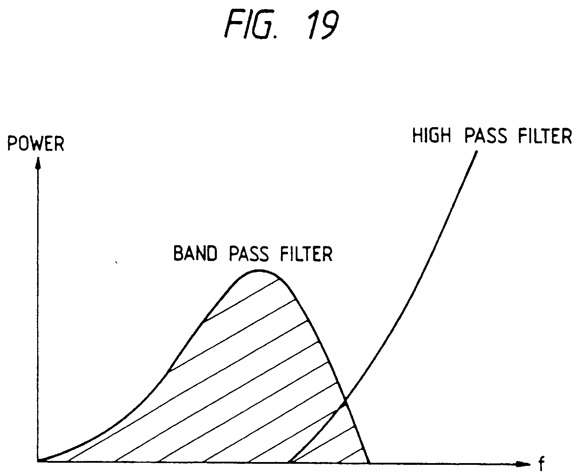

In the embodiment of Fig. 18, a code-amount predictive device 201 includes a frame memory 211 into which the input image data are temporarily stored. The image data are read out from the frame memory 211 and are then fed to horizontal-direction operator processors $212a_1$ and $212a_2$ and vertical-direction operator processors $212b_1$ and $212b_2$. The image data are subjected to predetermined filtering processes by these operator processors $212a_1$, $212a_2$, $212b_1$, and $212b_2$. The horizontal-direction operator processor $212a_1$ serves as a horizontal-direction band pass filter whose characteristic is shown in Fig. 19. The horizontal-direction operator processor $212a_2$ serves as a horizontal-direction high pass filter whose characteristic is shown in Fig. 19. The vertical-direction operator processor $212b_1$ serves as a vertical-direction band pass filter whose characteristic is shown in Fig. 19. The vertical-direction operator processor $212b_2$ serves as a vertical-direction high pass filter whose characteristic is shown in Fig. 19.

Output image data from the horizontal-direction operator processor $212a_1$ are fed to a calculator $213a_1$. The calculator $213a_1$ calculates the absolute values of the image data and sums the absolute values. Output image data from the calculator $213a_1$ are fed to a calculator 231. Output image data from the horizontal-direction operator processor $212a_2$ are fed to a calculator $213a_2$. The calculator $213a_2$ calculates the absolute values of the image data and sums the absolute values. Output image data from the calculator $213a_2$ are fed to the calculator 231. Output image data from the vertical-direction operator processor $212b_1$ are fed to a calculator $213b_1$. The calculator $213b_1$ calculates the absolute values of the image data and sums the absolute values. Output image data from the calculator $213b_1$ are fed to a calculator 233. Output image data from the vertical-direction operator processor $212b_2$ are fed to a calculator $213b_2$. The calculator $213b_2$ calculates the absolute values of the image data and sums the absolute values. Output image data from the calculator $213b_2$ are fed to the calculator 233.

The calculator 231 calculates a horizontal-direction activity value on the basis of the absolute-value addition results fed from the calculators $213a_1$ and $213a_2$. The calculator 233 calculates a vertical-direction activity value on the basis of the absolute-value addition results fed from the calculators $213b_1$ and $213b_2$. The horizontal-direction activity value or the vertical-direction activity value is determined in agreement with the absolute-value addition result M fed from the operator processor $212a_1$ or $212b_1$ which is corrected on the basis of the absolute-value addition result H fed from the operator processor $212a_2$ or $212b_2$ as follows.

$$M \to M \times 1.2 \text{ when } H > Hr$$
$$M \to M \text{ when } H \leqq Hr$$

where Hr denotes a predetermined reference value. The horizontal-direction activity value is fed from the calculator 231 to an adder 214 and a calculator 232. The vertical-direction activity value is fed from the calculator 233 to the adder 214 and the calculator 232.

The horizontal-direction activity value and the vertical-direction activity value are added by the adder 214. Output data from the adder 214 are fed to a code-amount converter 215. The code-amount converter 215 converts the output data of the adder 214 into a predicted code amount which will be obtained at a standard quantization step size and a standard band limiting value. Data representing the predicted code amount are outputted from the code-amount converter 215 to a quantization step converter 216 and a band limiting value converter 217.

The calculator 232 calculates the ratio between the horizontal-direction activity value and the vertical-direction activity value. Output data from the calculator 232 which represent the calculated ratio are fed to the band limiting value converter 217.

A data generator 219 is controlled by a CPU 208 to output data representing a target code amount. The output data from the data generator 219 are fed to the quantization step converter 216 and the band limiting value converter 217. The quantization step converter 216 compares the predicted code amount and the target code amount, and determines a quantization step size in response to the error between the predicted code amount and the target code amount. Data representing the determined quantization step size are outputted from the quantization step converter 216 to a quantizer 204. The band liming value converter 217 compares the predicted code amount and the target code amount, and determines a horizontal-direction band liming value and a vertical-direction band limiting value in response to the error between the predicted code amount and the target code amount and the calculated ratio data fed from the calculator 232. Data representing the determined horizontal-direction band limiting value are outputted from the band limiting value converter 217 to a horizontal-direction prefilter 202a. Data representing the determined vertical-direction band limiting value are outputted from the band limiting value converter 217 to a vertical-direction prefilter 202b.

## Claims

1.  An image data compression apparatus comprising:

    predicted amount generating means (11,12,13) for calculating the predicted code amount of one frame of the input image data; and
    means (17) for setting a target code amount; and
    quantization step-size generating means (15) for outputting a quantization step according to said predicted code amount and said target code amount; and
    transform means (3) for subjecting said input image data to a predetermined orthogonal transform; and
    quantizing means (4) for quantizing the output data from the transform means with a quantization step size outputted from the quantization step-size generating means;

    characterised in that

    said predicted amount generating means comprises
    processing means (11,12) for subjecting one frame of said input image data to a predetermined pixel filtering process and for outputting the resulting filtered data; and
    calculating means (13) for executing a predetermined calculation on said filtered data and outputting an activity value, said predetermined calculation including at least an addition carried out over all of the filtered data corresponding to one frame; and
means for converting (14) said activity value into a corresponding predicted code amount;
and wherein said quantization step-size generating means (15) is for deriving a difference between the predicted code amount and the target code amount, and for outputting a quantization step-size corresponding to the difference.

2. An image data compression apparatus according to claim 1, wherein the converting means includes means for varying a current predicted code amount as a function of at least one of a previous predicted code amount, a previous activity value, and a previous actual code amount.

3. An image data compression apparatus according to claim 2 comprising:

limit-value generating means (16) for deriving a difference between the predicted code amount and the target code amount, and outputting a band limiting value corresponding to the difference; and
prefiltering means (2) for limiting the frequency band of the input image data with the band limiting value outputted from the limit-value generating means.

4. An image data compression apparatus comprising:

predicted amount generating means (11,12,13) for calculating the predicted code amount of one frame of the input image data; and
means (17) for setting a target code amount; and
transform means (3) for performing a predetermined orthogonal transform; and characterised in that said apparatus comprises
limit-value generating means (16) for deriving a difference between the predicted code amount and the target code amount, and outputting a band limiting value corresponding to the difference; and
prefiltering means (2) for limiting the frequency band of the input image data according to said band limiting value, and for outputting band limited image data to said transform means (3); and said predicted amount generating means comprises
processing means (11,12) for subjecting one frame of said input image data to a predetermined pixel filtering process, and for outputting the resulting filtered data; and
calculating means (13) for executing a predetermined calculation on said filtered data and outputting an activity value, said predetermined calculation including at least an addition carried out over all of the filtered data corresponding to one frame; and
means for converting (14) said activity value into a corresponding predicted code amount.

5. An image data compression apparatus according to claim 4, wherein:

said processing means comprises first processing means (212a) for subjecting input image data to a predetermined horizontal-direction filtering process and second processing means (212b) for subjecting the input image data to a predetermined vertical-direction filtering process;
said calculating means (213a,213b,214) in use executes said predetermined calculation on output data from the first (212a) and second (212b) processing means;
said limit-value generating means (217) in use outputs a horizontal-direction band limiting value and a vertical-direction band limiting value corresponding to the difference; and
said prefiltering means comprises means (202a) for limiting a horizontal-direction band of the input image data with the horizontal-direction band limiting value outputted from the limit-value generating means (217) and means (202b) for limiting a vertical-direction band of the input image data with the vertical-direction band limiting value outputted from the limit-value generating means (217).

6. An image data compression apparatus according to claim 5, wherein

said first processing means (212a) has at least two different filtering characteristics and said second processing means (212b) has at least two different filtering characteristics; and wherein
said calculating means comprises first calculating means (231) for calculating a horizontal-direction activity value from output data from the first processing means (212a1,212a2) ; second calculating means (233) for calculating a vertical-direction activity value from output data from the second processing means (212b1,212b2) ; and adding means (214) for adding the horizontal-direction activity value and the vertical-direction activity value calculated by the first and second calculating means (231,233).

7. A data compression apparatus according to any preceding claim comprising block separating means for separating input image data into blocks each having a predetermined number of successive pixels, said transform means in use subjecting output data from the block separating means to a predetermined orthogonal transform; and encoding means (105) for encoding output data from the quantizing means; and

means (107,108) for controlling the predicted amount generating means so that a code amount of each segment can be approximately constant, each segment including a predetermined number of blocks.

**Patentansprüche**

1. Einrichtung zur Bilddatenkompression mit:

einer Erzeugungseinrichtung für ein vorbestimmtes Ausmaß (11,12,13) zum Berechnen des vorbestimmten Code-Ausmaßes eines Bildes der eingegebenen Bilddaten; und
einer Einrichtung (17) zum Einstellen eines Soll-Code-Ausmaßes; und
einer Erzeugungseinrichtung für eine Quantisierungsschrittgröße (15) zum Ausgeben eines Quantisierungsschrittes entsprechend dem vorbestimmten Code-Ausmaß und dem Soll-Code-Ausmaß; und
einer Transformationseinrichtung (3), um die eingegebenen Bilddaten einer vorbestimmten orthogonalen Transformation zu unterziehen; und
einer Quantisierungseinrichtung (4) zum Quantisieren der von der Transformationseinrichtung ausgegebenen Daten mit einer Quantisierungsschrittgröße, die von der Erzeugungseinrichtung für eine Quantisierungsschrittgröße ausgegeben ist;

**dadurch gekennzeichnet, daß**

die Erzeugungseinrichtung für ein vorbestimmtes Ausmaß versehen ist mit:
einer Verarbeitungseinrichtung (11,12), um ein Bild der eingegebenen Bilddaten einem vorbestimmten Bildpunkt-Filterprozeß zu unterziehen und die sich ergebenden gefilterten Daten auszugeben; und
einer Berechnungseinrichtung (13) zum Ausführen einer vorbestimmten Berechnung hinsichtlich der gefilterten Daten und zum Ausgeben eines Aktivitätswerts, wobei die vorbestimmte Berechnung zumindest eine Addition umfaßt, die hinsichtlich sämtlicher gefilterter Daten ausgeführt wird, die einem Bild entsprechen; und
einer Einrichtung zum Wandeln (14) des Aktivitätswerts in ein entsprechendes vorbestimmtes Code-Ausmaß;
wobei die Erzeugungseinrichtung für eine Quantisierungsschrittgröße (15) zum Erhalt einer Differenz zwischen dem vorbestimmten Code-Ausmaß und dem Soll-Code-Ausmaß sowie zum Ausgeben einer dieser Differenz entsprechenden Quantisierungsschrittgröße dient.

2. Einrichtung zur Bilddatenkompression nach Anspruch 1, wobei die Wandlungseinrichtung eine Einrichtung zum Variieren eines augenblicklich vorliegenden vorbestimmten Code-Ausmaßes als eine Funktion von zumindest einem aus einem vorherigen vorbestimmten Code-Ausmaß, einem vorherigen Aktivitätswert und einem vorherigen Ist-Code-Ausmaß umfaßt.

3. Einrichtung zur Bilddatenkompression nach Anspruch 2 mit:

einer Begrenzungswert-Erzeugungseinrichtung (16) zum Erhalten einer Differenz zwischen dem vorbestimmten Code-Ausmaß und dem Soll-Code-Ausmaß und zum Ausgeben eines Bandbegrenzungswertes entsprechend der Differenz; und
einer Vorfiltereinrichtung (2) zum Begrenzen des Frequenzbandes der eingegebenen Bilddaten mit dem Bandbegrenzungswert, der von der Grenzwerterzeugungseinrichtung ausgegeben ist.

4. Einrichtung zur Bilddatenkompression mit:

einer Erzeugungseinrichtung für ein vorbestimmtes Ausmaß (11,12,13) zum Berechnen des vorbestimmten Code-Ausmaßes eines Bildes der eingegebenen Bilddaten; und
eine Einrichtung (17) zum Einstellen eines Soll-Code-Ausmaßes; und
einer Transformationseinrichtung (3) zum Durchführen einer vorbestimmten orthogonalen Transformation;

**gekennzeichnet durch**

eine Grenzwert-Erzeugungseinrichtung (16) zum Erhalten einer Differenz zwischen dem vorbestimmten Code-Ausmaß und dem Soll-Code-Ausmaß und zum Ausgeben eines Bandbegrenzungswertes, der zu dieser Differenz korrespondiert; und

eine Vorfiltereinrichtung (2) zum Begrenzen des Frequenzbandes der eingegebenen Bilddaten entsprechend dem Bandbegrenzungswert und zum Ausgeben von bandbegrenzten Bilddaten an die Transformationseinrichtung (3);

wobei die Erzeugungseinrichtung für ein vorbestimmtes Ausmaß versehen ist mit:

einer Verarbeitungseinrichtung (11,12), um ein Bild der eingegebenen Bilddaten einem vorbestimmten Bildpunkt-Filterprozeß zu unterziehen und um die sich ergebenden gefilterten Daten auszugeben; und

einer Berechnungseinrichtung (13) zum Ausführen einer vorbestimmten Berechnung hinsichtlich der gefilterten Daten und zum Ausgeben eines Aktivitätswerts, wobei die vorbestimmte Berechnung zumindest eine Addition umfaßt, die hinsichtlich sämtlicher der gefilterten Daten ausgeführt wird, die zu einem Bild korrespondieren; und

einer Einrichtung zum Wandeln (14) des Aktivitätswerts in ein entsprechendes vorbestimmtes Code-Ausmaß.

5. Einrichtung zur Bilddatenkompression nach Anspruch 4, wobei

die Verarbeitungseinrichtung eine erste Verarbeitungseinrichtung (212a), um eingegebene Bilddaten einem vorbestimmten Horizontalrichtungs-Filterprozeß zu unterziehen, und eine zweite Verarbeitungseinrichtung (212b) umfaßt, um die eingegebenen Bilddaten einem vorbestimmten Vertikalrichtungs-Filterprozeß zu unterziehen;

die Berechnungseinrichtung (213a,213b,214), die in Gebrauch ist, die vorbestimmte Berechnung hinsichtlich Ausgabedaten von der ersten (212A) und der zweiten (212b) Verarbeitungseinrichtung ausführt;

die Grenzwert-Erzeugungseinrichtung (217), die in Gebrauch ist, einen Horizontalrichtungs-Bandbegrenzungswert und einen Vertikalrichtungs-Bandbegrenzungswert entsprechend der Differenz ausgibt; und

die Vorfiltereinrichtung eine Einrichtung (202a) zum Begrenzen eines Horizontalrichtungs-Bandes der eingegebenen Bilddaten mit dem Horizontalrichtungs-Bandbegrenzungswert, der von der Grenzwert-Erzeugungseinrichtung (217) ausgegeben ist, und eine Einrichtung (202b) zum Begrenzen eines Vertikalrichtungs-Bandes der eingegebenen Bilddaten mit dem Vertikalrichtungs-Bandbegrenzungswert umfaßt, der von der Grenzwert-Erzeugungseinrichtung (217) ausgegeben ist.

6. Einrichtung zur Bilddatenkompression nach Anspruch 5, wobei

die erste Verarbeitungseinrichtung (212a) zumindest zwei unterschiedliche Filtercharakteristika aufweist und die zweite Verarbeitungseinrichtung (212b) zumindest zwei unterschiedliche Filtercharakteristika aufweist; und wobei

die Berechnungseinrichtung eine erste Berechnungseinrichtung (231) zum Berechnen eines Horizontalrichtungs-Aktivitätswerts aus den Ausgabedaten von der ersten Verarbeitungseinrichtung (212a1,212a2); eine zweite Berechnungseinrichtung (233) zum Berechnen eines Vertikalrichtungs-Aktivitätswerts aus den Ausgabedaten von der zweiten Verarbeitungseinrichtung (212b1,212b2) und eine Addiereinrichtung (214) zum Addieren des Horizontalrichtungs-Aktivitätswerts und des Vertikalrichtungs-Aktivitätswerts umfaßt, die durch die erste und zweite Berechnungseinrichtung (231, 233) berechnet wurden.

7. Einrichtung zur Datenkompression nach einem der vorherigen Ansprüche mit einer Blocktrenneinrichtung zum Trennen von eingegebenen Bilddaten in Blöcke, die jeweils eine vorbestimmte Anzahl von aufeinanderfolgenden Bildpunkten aufweisen, wobei die Transformationseinrichtung, die in Gebrauch ist, die Ausgabedaten von der Blocktrenneinrichtung einer vorbestimmten orthogonalen Transformation unterzieht; und

einer Codiereinrichtung (105) zum Codieren von Ausgabedaten von der Quantisierungseinrichtung; und

einer Einrichtung (107,108) zum Steuern der Erzeugungseinrichtung für ein vorbestimmtes Ausmaß derart, daß ein Code-Ausmaß eines jeden Segments nahezu konstant sein kann, wobei jedes Segment eine vorbestimmte Anzahl an Blöcken umfaßt.

**Revendications**

1. Appareil de compression de données d'image comprenant:

   un moyen (11, 12, 13) de génération de quantité prédite destiné à calculer la quantité prédite de codes d'une séquence des données d'image; et
   un moyen (17) destiné à déterminer une quantité cible de codes; et
   un moyen (15) de génération de grandeur d'échelon de quantification destiné à émettre un échelon de quantification en fonction de ladite quantité prédite de codes et de ladite quantité cible de codes; et
   un moyen de transformation (3) destiné à soumettre lesdites données d'image d'entrée à une transformation orthogonale prédéterminée; et
   un moyen de quantification (4) destiné à quantifier les données de sortie du moyen de transformation avec une grandeur d'échelon de quantification émise par le moyen de génération de grandeur d'échelon; caractérisé en ce que
   ledit moyen de génération de quantité prédite comprend
   un moyen de traitement (11, 12) destiné à soumettre une séquence desdites données d'image d'entrée à une opération de filtrage de pixel et à émettre les données filtrées résultantes; et
   un moyen de calcul (13) destiné à exécuter un calcul prédéterminé sur lesdites données filtrées et à émettre une valeur d'activité, ledit calcul prédéterminé comprenant au moins une addition effectuée sur toutes les données filtrées correspondant à une séquence; et
   un moyen (14) destiné à convertir ladite valeur d'activité en une quantité prédite correspondante de codes;
   et dans lequel ledit moyen (15) de génération de grandeur d'échelon de quantification est destiné à élaborer une différence entre la quantité prédite de codes et la quantité cible de codes et à émettre une grandeur d'échelon correspondant à la différence.

2. Appareil de compression de données d'image selon la revendication 1, dans lequel le moyen de conversion comprend un moyen destiné à modifier une quantité prédite actuelle de codes en fonction d'au moins une quantité prédite antérieure de codes, une valeur antérieure d'activité, et une quantité réelle antérieure de codes.

3. Appareil de compression de données d'image selon la revendication 2, comprenant:

   un moyen (16) de génération de valeur limite destiné à élaborer une différence entre la quantité prédite de codes et la quantité cible de codes et à émettre une valeur de limitation de bande correspondant à la différence; et
   un moyen de préfiltrage (2) destiné à limiter la bande de fréquence des données d'image d'entrée à l'aide de la valeur de limitation de bande émise par le moyen de génération de valeur limite.

4. Appareil de compression de données d'image comprenant:

   un moyen (11, 12, 13) de génération de quantité prédite destiné à calculer la quantité prédite de code d'une séquence des données d'image d'entrée; et
   un moyen (17) destiné à établir une quantité cible de codes; et
   un moyen de transformation (3) destiné à effectuer une transformation orthogonale prédéterminée; et caractérisé en ce que ledit appareil comprend:
   un moyen (16) de génération de valeur limite destiné à élaborer une différence entre la quantité prédite de codes et la quantité cible de codes, et à émettre une valeur de limitation de bande correspondant à la différence; et
   un moyen de préfiltrage (2) destiné à limiter la bande de fréquence des données d'image d'entrée en fonction de ladite valeur de limitation de bande et à émettre des données d'image à bande limitée vers ledit moyen de transformation (3); et ledit moyen de génération de quantité prédite comprend
   un moyen de traitement (11, 12) destiné à soumettre une séquence desdites données d'image d'entrée à une opération de filtrage et à émettre les données filtrées résultantes; et
   un moyen de calcul (13) destiné à exécuter un calcul prédéterminé sur lesdites données filtrées et à émettre une valeur d'activité, ledit calcul prédéterminé comprenant au moins une addition effectuée sur toutes les données filtrées correspondant à une séquence; et
   un moyen destiné à convertir (14) ladite valeur d'activité en une quantité de code prédite correspondante.

5. Appareil de compression de données d'image selon la revendication 4, dans lequel:

ledit moyen de traitement comprend un premier moyen de traitement (212a) destiné à soumettre des données d'image d'entrée à une opération de filtrage prédéterminée dans la direction horizontale et un second moyen de traitement (212b) destiné à soumettre les données d'image d'entrée à une opération de filtrage prédéterminé dans la direction verticale;

ledit moyen de calcul (213a, 213b, 214), pendant le fonctionnement, exécute ledit calcul prédéterminé sur les données de sortie en provenance des premier (212a) et second (212b) moyens de traitement;

ledit moyen (217) de génération de valeur limite, pendant le fonctionnement, émet une valeur de limitation de bande dans la direction horizontale et une valeur de limitation de bande dans la direction verticale correspondant à la différence; et

ledit moyen de préfiltrage comprend un moyen (202a) destiné à limiter une bande, dans la direction horizontale, des données d'entrée à l'aide de la valeur de limitation de bande, dans la direction horizontale, émise par le moyen (217) de génération de valeur limite et un moyen (202b) destiné à limiter une bande, dans la direction verticale, des données d'image d'entrée avec la valeur de limitation de bande, dans la direction verticale, émise par le moyen (217) de génération de valeur limite.

6. Appareil de compression de données d'image selon la revendication 5, dans lequel

ledit premier moyen de traitement (212a) possède au moins deux caractéristiques de filtrage différentes et ledit second moyen de traitement (212b) possède au moins deux caractéristiques de filtrage différentes; et dans lequel

ledit moyen de calcul comprend un premier moyen de calcul (231) destiné à calculer une valeur d'activité dans la direction horizontale à partir des données de sortie en provenance du premier moyen de traitement (212a1, 212a2); un second moyen de calcul (233) destiné à calculer une valeur d'activité dans la direction verticale à partir des données de sortie en provenance du second moyen de traitement (212b1, 212b2); et un moyen d'addition (214) destiné à ajouter la valeur d'activité dans la direction horizontale et la valeur d'activité dans la direction verticale calculées par les premier et second moyens de calcul (231, 233).

7. Appareil de compression de données selon l'une quelconque des revendications précédentes comprenant un moyen de séparation de blocs destiné à diviser les données d'image en blocs dont chacun comporte un nombre prédéterminé de pixels successifs, ledit moyen de transformation, pendant le fonctionnement, soumettant les données de sortie en provenance du moyen de séparation de blocs à une transformation orthogonale prédéterminée; et un moyen de codage (105) destiné à coder les données de sortie en provenance du moyen de quantification :et

un moyen (107, 108) destiné à commander le moyen de génération de quantité prédite de manière qu'une quantité de codes de chaque segment puisse être à peu près constante, chaque segment comprenant un nombre prédéterminé de blocs.

## FIG. 1

INPUT DATA

PREDICTIVE DEVICE _1_

PREFILTER _2_

DCT _3_

QUANTIZER _4_

MOTION COMPENSATOR DIFFERENCE GENE _6_

ENCODER _5_

OUTPUT DATA

## FIG. 2

FRAME MEMORY _11_

OPERATOR PROCESSOR _12_

CALCULATOR _13_

_1_

CONVERTER _14_

QUANTIZATION STEP CONVERTER _15_

BAND LIMIT VALUE CONVERTER _16_

DATA GENERATOR _17_

TO QUANTIZER 4

TO PREFILTER 2

EP 0 444 918 B1

## FIG. 3

(a)

| | | |
|---|---|---|
| 1 | -4 | 1 |
| -4 | 12 | -4 |
| 1 | -4 | 1 |

(b)

| | | |
|---|---|---|
| 1 | 2 | 1 |
| 2 | 4 | 2 |
| 1 | 2 | 1 |

(c)

| | | |
|---|---|---|
| -1 | -1 | -1 |
| -1 | 8 | -1 |
| -1 | -1 | -1 |

## FIG. 4

ADD RESULT

CODE AMOUNT

# FIG. 5

# FIG. 6

# FIG. 7

FIG. 8

INPUT DATA

OUTPUT DATA

CPU — 108

BUFFER MEMORY — 107

PREDICTIVE DEVICE — 101

PREFILTER — 102

DCT — 103

QUANTIZER — 104

ENCODER — 105

MOTION COMPENSATOR DIFFERENCE GENE — 106

## FIG. 9

INPUT DATA →  FRAME MEMORY ⌐111

OPERATOR PROCESSOR ⌐112

CALCULATOR ⌐113

114~ CONVERTER

107~ BUFFER MEMORY

FROM ENCODER 105 →

115~ QUANTIZATION STEP CONVERTER

116 BAND LIMIT VALUE CONVERTER

DATA GENERATOR ~117

CPU

~108

TO QUANTIZER 104

TO PREFILTER 102

101

EP 0 444 918 B1

# FIG. 10

# FIG. 11

## FIG. 12

EP 0 444 918 B1

## FIG. 13

## FIG. 14

_201_

INPUT DATA → FRAME MEMORY — 211

TO QUANTIZER 204

212a — OPERATOR PROCESSOR

212b — OPERATOR PROCESSOR

TO H-PREFILTER 202a

213a — CALCULATOR

213b — CALCULATOR

TO V-PREFILTER 202b

218 — CALCULATOR

⊕ — 214

CONVERTER — 215

217 — BAND LIMIT VALUE CONVERTER

216 — QUNATIZATION STEP CONVERTER

219 — DATA GENERATOR

208 — CPU

207 — BUFFER MEMORY

FROM ENCODER 205

## FIG. 15

(a)  | 1 | 2 | 1 |

(b)  | -1 | 2 | -1 |

## FIG. 16

(a) (b)

(a): | 1 |
    | 2 |
    | 1 |

(b): | -1 |
    | 2 |
    | -1 |

## FIG. 17

|  |  | HORIZONTAL BAND LIMIT VALUE | | | | |
|---|---|---|---|---|---|---|
|  |  | 0/16 | 1/16 | 2/16 | 3/16 ···· | 16/16 |
|  | 0/16 | 0 | 1.5 | 3 | 4.5 | 25 |
|  | 1/16 | 1.5 | 3 | 4.5 ········· | 25 ···· | |
|  | 2/16 | 3 | 4.5 ·········· | 25 | ········· | |
| VERTICAL BAND LIMIT VALUE | 3/16 | 4.5 ············· | 25 | ············· | | |
|  | · | ·········· 25 | ················· | | | |
|  | · | ····· 25 | ························· | | | |
|  | 16/16 | 25 ························· | 50 | | | |

CODE-AMOUNT REDUCTION PERCENT

# FIG. 18

201

INPUT DATA →□ FRAME MEMORY ╲211

212a₁ — OPERATOR PROCESSOR

212a₂ — OPERATOR PROCESSOR

212b₁ — OPERATOR PROCESSOR

212b₂ — OPERATOR PROCESSOR

213a₁ — CALCULATOR

213a₂ — CALCULATOR

213b₁ — CALCULATOR

213b₂ — CALCULATOR

231 — CALCULATOR

CALCULATOR — 233

232 — CALCULATOR

⊕ — 214

CONVERTER — 215

217 — BAND LIMIT VALUE CONVERTER

DATA GENETATOR — 219

207 — BUFFER MEMORY

QUNATIZATION STEP CONVERTER — 216

208 — CPU

TO
H-PREFILTER 202a

TO
V-PREFILTER 202b

FROM
ENCODER 205

TO QUANTIZER 204

# FIG. 19

POWER

HIGH PASS FILTER

BAND PASS FILTER

f